# EUROPÄISCHE PATENTSCHRIFT

(11) **EP 4 111 035 B1**
(45) Veröffentlichungstag und Bekanntmachung des Hinweises auf die Patenterteilung: **06.11.2024**
(21) Anmeldenummer: 21713324.8
(22) Anmeldetag: 23.02.2021
(51) Int. Cl.: F01D 9/04, F01D 25/24, F04D 29/54

(54) **LEITSCHAUFELANORDNUNG FÜR EINE STRÖMUNGSMASCHINE**
GUIDE BLADE ARRANGEMENT FOR A TURBOMACHINE
ENSEMBLE AUBE DIRECTRICE POUR UNE TURBOMACHINE

(30) Priorität: 26.02.2020 DE 102020202441
(43) Veröffentlichungstag der Anmeldung: 04.01.2023
(73) Patentinhaber: MTU Aero Engines AG, 80995 München (DE)
(72) Erfinder: ERTL, Franz-Josef, 80995 München (DE); HACKENBERG, Hans-Peter, 80995 München (DE); BUCK, Alexander, 80995 München (DE)
(86) Internationale Anmeldenummer: PCT/DE2021/000035
(87) Internationale Veröffentlichungsnummer: WO 2021/170167

(56) Entgegenhaltungen:
- EP-A1- 3 103 571
- EP-B1- 3 103 571
- WO-A1-2005/008032
- DE-A1- 2 849 747
- US-A- 2 724 544
- US-A1- 2020 032 661

## Beschreibung

### Technisches Gebiet

Die vorliegende Erfindung betrifft eine Leitschaufelanordnung für eine Strömungsmaschine.

### Stand der Technik

Bei der Strömungsmaschine kann es sich bspw. um ein Strahltriebwerk handeln, z. B. um ein Mantelstromtriebwerk. Funktional gliedert sich die Strömungsmaschine in Verdichter, Brennkammer und Turbine. Etwa im Falle des Strahltriebwerks wird angesaugte Luft vom Verdichter komprimiert und in der nachgelagerten Brennkammer mit hinzugemischtem Kerosin verbrannt. Das entstehende Heißgas, eine Mischung aus Verbrennungsgas und Luft, durchströmt die nachgelagerte Turbine und wird dabei expandiert.

Leitschaufelanordnungen sind aus den Dokumenten US2724544A1 und DE2849747A1 bekannt.

Der vorliegende Gegenstand betrifft eine Leitschaufelanordnung mit einem Leitschaufelblatt, das an einer gaskanalzugewandten Seite einer Plattform angeordnet ist. Die Plattform begrenzt den Gaskanal bzw. ein Segment davon in radialer Richtung. Die Leitschaufelanordnung kann mit weiteren, bspw. baugleichen Leitschaufelanordnungen zusammengesetzt einen Leitschaufelkranz bilden, der in der Strömungsmaschine in einer axialen Abfolge mit Laufschaufelkränzen angeordnet wird. Ein Leit- und ein Laufschaufelkranz können miteinander eine Stufe bilden, und sowohl der Verdichter als auch die Turbine können jeweils aus mehreren solchen Stufen aufgebaut sein.

### Darstellung der Erfindung

Der vorliegenden Erfindung liegt das technische Problem zugrunde, eine besonders vorteilhafte Leitschaufelanordnung anzugeben.

Dies wird erfindungsgemäß mit der Leitschaufelanordnung gemäß Anspruch 1 gelöst. Deren Plattform ist an ihrer gaskanalabgewandten Seite zumindest in einem Bereich konturiert, nämlich mit in Umlaufrichtung aufeinanderfolgenden Erhebungen und Vertiefungen vorgesehen. Diese an der gaskanalabgewandten Seite der Plattform vorgesehenen Erhebungen und Vertiefungen sind dabei über eine in der Umlaufrichtung veränderliche Plattformdicke eingestellt, die mit einem kontinuierlichen Verlauf wiederholt zu- und abnimmt. Die Plattformdicke wird radial genommen, und sie nimmt entlang der Umlaufrichtung über den konturierten Bereich unterschiedliche Werte an.

Speziell am Übergang zwischen dem Leitschaufelblatt und der Plattform können hohe mechanische Spannungen auftreten, bspw. aufgrund großer thermischer Gradienten bzw. großer Steifigkeitssprünge. Dies kann bspw. eine reduzierte Lebensdauer zur Folge haben. Der Übergangsbereich an sich ist dabei aber nur begrenzt einer Optimierung zugänglich (z. B. einer Aufdickung des Fillet), es kann bspw. einen Zielkonflikt mit dem aerodynamischen Wirkungsgrad geben. Der vorliegende Ansatz geht insofern dahin, mit der Konturierung der gaskanalabgewandten Seite der Plattform an einer aerodynamisch nicht kritischen Stelle einzugreifen.

Mit den Erhebungen und Vertiefungen dort lässt sich auch an der entgegengesetzten, gaskanalzugewandten Seite und insbesondere im Übergangsbereich das Spannungsniveau absenken, kann also den vorstehend geschilderten negativen Effekten entgegengewirkt werden. Die Entkopplung zwischen Aerodynamik und Strukturmechanik kommt dabei auch darin zum Ausdruck, dass die Konturierung mit einer veränderlichen Plattformdicke einhergeht. Vereinfacht gesprochen wird die gaskanalabgewandte Konturierung ohne komplementäre Konturierung der gaskanalzugewandten Seite umgesetzt, sodass die gaskanalzugewandte Seite der Plattform auf die aerodynamischen Erfordernisse optimiert werden kann.

Bevorzugte Ausgestaltungen finden sich in den abhängigen Ansprüchen und der gesamten Beschreibung, wobei bei der Darstellung der Merkmale nicht immer im Einzelnen zwischen Vorrichtungs-, Verfahrens- bzw. Verwendungsaspekten unterschieden wird; jedenfalls implizit ist die Offenbarung hinsichtlich sämtlicher Anspruchskategorien zu lesen. Sie betrifft also insbesondere stets sowohl die Leitschaufelanordnung als auch ein Turbinenmodul mit einer solchen bzw. entsprechende Verwendungen.

Im Rahmen der vorliegenden Offenbarung beziehen sich die Angaben "axial", "radial" bzw. "umlaufend", sowie die zugehörigen Richtungen (Axialrichtung, Radialrichtung und Umlaufrichtung), auf die Längsachse der Strömungsmaschine, die bspw. mit einer Drehachse von deren Laufschaufelkränzen zusammenfällt. "Vorne" und "hinten" beziehen sich auf die Strömungsrichtung im Gaskanal, vorne meint also stromaufwärtig und hinten stromabwärtig. "Ein" und "eine" sind im Rahmen dieser Offenbarung ohne ausdrücklich gegenteilige Angabe als unbestimmte Artikel und damit immer auch als "mindestens ein" bzw. "mindestens eine" zu lesen, es können also bspw. an der Plattform auch mehrere Leitschaufelblätter angeordnet sein (siehe unten im Detail).

In dem konturierten Bereich gibt es umlaufend aufeinanderfolgend mehrere Erhebungen und Vertiefungen, also bspw. mindestens zwei Erhebungen und mindestens zwei Vertiefungen. Die Konturierung ist dabei über die veränderliche Plattformdicke eingestellt, die entgegengesetzte gaskanalzugewandte Seite ist also jedenfalls nicht komplementär konturiert. Dabei hat die Plattformdicke einen "kontinuierlichen Verlauf, sie ändert sich also nicht in einem Sprung (Stufenfunktion), sondern in mathematischer Hinsicht mit einem stetigen, insbesondere stetig differenzierbaren Verlauf. Quantitativ kann dies bspw. bedeuten, dass es zwischen zwei in Umlaufrichtung nächstbenachbarten Maxima der Plattformdicke allenfalls einen Abschnitt mit konstanter Plattformdicke gibt, der sich höchstens über den 0,3-, 0,2- bzw. 0,1-fachen Umlaufabstand zwischen den nächstbenachbarten Maxima erstreckt (was bevorzugt für sämtliche jeweils nächstbenachbarten Maxima gilt). Besonders bevorzugt gibt es gar keinen solchen Bereich mit konstanter Plattformdicke, ändert sich die Plattformdicke zwischen den Maxima also fortlaufend.

Mit der erfindungsgemäßen Konturierung kann sowohl die Innen- als auch die Au-ßenplattform optimiert werden. Erstere begrenzt den Gaskanal nach radial innen, und ihre gaskanalabgewandte Seite weist entsprechend ebenfalls nach radial innen. Die Außenplattform begrenzt den Gaskanal hingegen nach radial außen, und ihre gaskanalabgewandte Seite weist entsprechend ebenfalls nach radial außen. Bevorzugt weist die Leitschaufelanordnung sowohl eine Innen- als auch eine Außenplattform an dem Leitschaufelblatt auf, besonders bevorzugt sind dann auch beide Plattformen in erfindungsgemäßer Weise konturiert.

Gemäß einer bevorzugten Ausführungsform macht eine in dem konturierten Bereich an den Erhebungen und Vertiefungen jeweils radial genommene Amplitude mindestens 25 %, bevorzugt mindestens 50 % einer mittleren Plattformdicke aus. Mögliche Obergrenzen der Amplitude, die im Allgemeinen auch unabhängig von einer Untergrenze offenbart sein sollen, bevorzugt jedoch in Verbindung damit Anwendung finden, liegen bei in der Reihenfolge der Nennung zunehmend bevorzugt höchstens 200 %, 150 % bzw. 100 % der mittleren Plattformdicke. Letztere ergibt sich als in der Umlaufrichtung über den Bereich gebildeter Mittelwert der Plattformdicken. Die mittlere Plattformdicke kann insbesondere in einer achssenkrechten Schnittebene ermittelt werden, wobei die Amplitude dann in derselben Schnittebene betrachtet wird. Die Amplitude kann sich z. B. als Auslenkung von einer als Mittelwert gebildeten Kurve ergeben, also bspw. einer um den Verlauf der gaskanalzugewandten Seite bereinigten Kreisform.

In bevorzugter Ausgestaltung ändert sich die Amplitude der Erhebungen und Vertiefungen in der Umlaufrichtung über den konturierten Bereich hinweg. Es können also bspw. eine Erhebung und eine Vertiefung, die umlaufend aufeinander folgen, eine unterschiedliche Amplitude haben, und es können ferner insbesondere zwei aufeinanderfolgende Erhebungen und/oder zwei aufeinanderfolgende Vertiefungen unterschiedliche Amplituden haben. Die Veränderung der Amplituden kann wiederum insbesondere in einer achssenkrechten Schnittebene betrachtet werden. Die veränderliche Amplitude kann bspw. Ausdruck der strukturmechanischen Optimierung sein, mit welcher auf der gaskanalzugewandten Seite ein akzeptables Spannungsniveau erreicht wird. Ferner kann sich eine Aufdickung bzw. Verstärkung damit bspw. auch nur auf die tatsächlich erforderlichen Bereiche begrenzen lassen, kann also umgekehrt funktional nicht erforderlichen, übermäßigen Plattformdicken und damit entsprechend hohen Gewichten vorgebeugt werden (relevant für bspw. den Kerosinverbrauch eines Flugtriebwerks).

Gemäß einer bevorzugten Ausführungsform ändert sich die Amplitude, bezogen auf eine über sämtliche Erhebungen und Vertiefungen des konturierten Bereichs gebildete mittlere Amplitude, um den Betrag nach mindestens 15 %, weiter bevorzugt mindestens 25 % bzw. 30 %. Mögliche Obergrenzen, die wiederum auch unabhängig von einer Untergrenze offenbart sein sollen, bevorzugt jedoch in Kombination damit Anwendung finden, können bspw. bei einer Änderung um dem Betrag nach höchstens 100 %, 75 % bzw. 50 % der mittleren Amplitude liegen (in der Reihenfolge der Nennung zunehmend bevorzugt). Die Betrachtung erfolgt wiederum bevorzugt in einer achssenkrechten Schnittebene. Eine entsprechende geänderte Amplitude ergibt sich dann für zumindest eine der Erhebungen und/oder Vertiefungen, bevorzugt für mehrere Erhebungen und/oder Vertiefungen. Die Prozentangabe betrifft dabei den Betrag, die Amplitude kann also um einen entsprechenden Prozentwert kleiner oder größer als die mittlere Amplitude sein.

Gemäß einer bevorzugten Ausführungsform hat die Vorderkante und/oder hat die Hinterkante des Leitschaufelblatts in radialer Richtung einen Überlapp mit dem konturierten Bereich. Entsprechend soll eine radiale Projektion der Vorder- und/oder Hinterkante auf die gaskanalabgewandte Seite des Leitschaufelblatts in dem konturierten Bereich liegen. In anderen Worten liegt die Konturierung bezogen auf die axiale Position also vorzugsweise im Bereich der Hinter- und/oder Vorderkante des Leitschaufelblatts; ein entsprechend großer Bereich kann bspw. Hinter- und Vorderkante zugleich abdecken.

Gemäß einer bevorzugten Ausführungsform ist die gaskanalzugewandte Seite der Plattform zumindest bereichsweise glatt ausgebildet. Sie kann insbesondere in einem Bereich glatt ausgebildet sein, der dem konturierten Bereich radial entgegengesetzt liegt. Alternativ kann, wie eingangs dargelegt, auch die gaskanalzugewandte Seite konturiert sein, aber eben nicht komplementär zur gaskanalabgewandten Seite. Die nicht komplementäre bzw. glatte Ausgestaltung kann Ausdruck der aerodynamischen Optimierung sein (die erfindungsgemäße strukturmechanische Konturierung beeinträchtigt die Aerodynamik jedenfalls nicht).

Die Leitschaufelanordnung, die auch als Leitschaufelcluster bezeichnet werden kann, kann eine oder mehrere Schaufeln umfassen.

Die ein oder mehreren Schaufelblätter der Leitschaufelanordnung sind vorzugsweise mit der Plattform, insbesondere mit der Innen- und/oder Außenplattform, der Leitschaufelanordnung gemeinsam einstückig, integral und/oder monolithisch ausgebildet, beispielsweise als ein Stück gegossen oder als ein Stück generativ gefertigt.

In bevorzugter Ausgestaltung handelt es sich bei der Leitschaufelanordnung um ein Mehrfach-Segment, sind an der Plattform nämlich n Leitschaufelblätter angeordnet (mit n ≥ 2, wobei n eine natürliche Zahl ist). Bevorzugt können an der Plattform bspw. mindestens drei oder vier Leitschaufelblätter angeordnet sein, mögliche Obergrenzen können (davon unabhängig) bspw. bei höchstens 20, 15 bzw. 10 Leitschaufelblättern liegen.

In bevorzugter Ausgestaltung weicht eine Wellenlänge, mit welcher die Erhebungen und Vertiefungen in dem konturierten Bereich umlaufend aufeinanderfolgen, um dem Betrag nach nicht mehr als 20 % von einem Umlaufabstand zwischen nächstbenachbarten Leitschaufeln ab. Im Allgemeinen können die Umlaufabstände auch variieren, wobei sich die Wellenlänge dann auf einen über das Segment als Mittelwert gebildeten Umlaufabstand bezieht. Bevorzugt sind die Leitschaufelblätter jedoch äquidistant angeordnet. Im Einzelnen wird der Umlaufabstand zwischen den Schaufelblättern an deren Vorderkanten genommen, und zwar radial auf Höhe des Übergangsbereichs zur Plattform. Die Abweichung der Wellenlänge vom Umlaufabstand kann auch noch kleiner sein, bspw. dem Betrag nach höchstens 10 % davon ausmachen, die Wellenlänge und der Umlaufabstand können auch gleich groß sein (0 %).

Gemäß einer bevorzugten Ausführungsform weicht die gesamte Zahl Z_{E} der Erhebungen, die in dem konturierten Bereich umlaufend aufeinander folgen, um höchstens ±1 von der Zahl n der Leitschaufelblätter ab und/oder weicht die gesamte Zahl Z_{V} der Vertiefungen, die in dem konturierten Bereich umlaufend aufeinander folgen, um höchstens ±1 von der Zahl n der Leitschaufelblätter ab. Es gilt also in anderen Worten n-1 ≤ Z_{E} ≤ n+1 und/oder n-1 ≤ Z_{V} ≤ n+1. Die Zahl der Erhebungen und Vertiefungen entspricht also im Wesentlichen der Zahl n der Leitschaufelblätter, wofür die Erfinder gute strukturmechanische Eigenschaften beobachtet haben (Absenkung des Spannungsniveaus).

Der konturierte Bereich liegt in einer radial offenen Tasche der Plattform. Im Falle der Innenplattform ist diese Tasche nach radial innen offen, bei der Außenplattform nach radial außen. In der Umlaufrichtung wird die Tasche von Seitenstegen eingefasst, die bspw. der mechanischen Stabilisierung bzw. dem Anschluss zum Nachbarsegment dienen können, also der mechanischen Anbindung an die umlaufend benachbarte Plattform. Ein solcher Seitensteg kann sich in Umlaufrichtung bspw. über mindestens 3 mm bzw. 5 mm erstrecken, mit möglichen Obergrenzen bei bspw. höchstens 15 mm bzw. 10 mm. Im Bereich der Seitenstege kann die Plattformdicke generell erhöht sein, sie kann bspw. bei mindestens dem 2-, 3-, 4- bzw. 5-fachen der mittleren Plattformdicke in dem konturierten Bereich liegen (mit möglichen Obergrenzen bei z. B. höchstens dem 30-, 20- bzw. 15-fachen).

Zusätzlich kann die radial offene Tasche auch axial von einem Steg eingefasst werden. Sie kann nach axial vorne oder nach axial hinten mit jeweils einem Steg eingefasst werden, bevorzugt beides. Ein solcher Steg kann bspw. eine Dicht- und/oder eine Montagefunktion erfüllen, er kann sich in Axialrichtung bspw. über mindestens 3 mm bzw. 5 mm erstrecken, mit möglichen Obergrenzen bei bspw. höchstens 15 mm bzw. 10 mm. Die Plattformdicke kann im Bereich des Stegs bspw. bei mindestens dem 2-, 3-, 4- bzw. 5-fachen der mittleren Plattformdicke in dem konturierten Bereich liegen (mit möglichen Obergrenzen bei z. B. höchstens dem 30-, 20- bzw. 15-fachen).

Insgesamt kann die gaskanalabgewandte Seite der Plattform auch mit mehreren axial aufeinanderfolgenden Taschen vorgesehen sein, wobei zumindest eine davon mit der erfindungsgemäßen Konturierung vorgesehen ist. Im Falle einer Innenplattform kann bspw. ein in Umlaufrichtung verlaufender Mittelsteg, der in etwa axial mittig auf Höhe der Leitschaufelblätter liegt, eine axial vordere und eine axiale hintere Tasche bilden. Im Falle einer Außenplattform kann es bspw. auch mehrere axial aufeinanderfolgende Taschen geben, die axial von Dicht- bzw. Montagestegen eingefasst werden können. Ein Montagesteg kann z. B. sogenannte Vanehaken tragen bzw. bilden (zur Aufhängung der Leitschaufelanordnung am Gehäuse). An der gaskanalabgewandten Seite der Außenplattform kann es axial auf Höhe der Hinterkanten aber auch einen Bereich geben, der weder nach axial hinten noch seitlich (umlaufend) von Stegen eingefasst wird. Alternativ oder zusätzlich kann es an der gaskanalabgewandten Seite der Außenplattform auch axial auf Höhe der Vorderkanten einen Bereich geben, der nicht nach axial vorne und/oder nicht seitlich (umlaufend) mit Stegen eingefasst ist.

Auch unabhängig von diesen Details kann sich der konturierte Bereich umlaufend bspw. über mindestens 50 %, 60 % bzw. 70 % der Umlaufweite der Plattform erstrecken. Er kann auch über die gesamte Umlaufweite reichen (100 %), es können aber auch Obergrenzen bei bspw. höchstens 90 % bzw. 80 % der Umlaufweite liegen.

Axial kann sich der konturierte Bereich bspw. über mindestens 20 %, 30 %, 40 % bzw. 50 % der axialen Plattformlänge erstrecken. Er kann wiederum über die gesamte axiale Länge reichen (100 %), es können aber auch Obergrenzen bei bspw. höchstens 90 % bzw. 80 % liegen.

Die Erfindung betrifft auch ein Turbinenmodul mit einer vorliegend offenbarten Leitschaufelanordnung, insbesondere mit einem aus mehreren Leitschaufelanordnungen aufgebauten Leitschaufelkranz. Ferner betrifft die Erfindung eine Strömungsmaschine mit einer vorliegend offenbarten Leitschaufelanordnung bzw. einem entsprechenden Leitschaufelkranz, insbesondere mit einem eben erwähnten Turbinenmodul. Bei der Strömungsmaschine kann es sich bevorzugt um ein Flugtriebwerk handeln, bspw. ein Mantelstromtriebwerk.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: eine Strömungsmaschine in einem Axialschnitt, konkret ein Mantelstromtriebwerk;
- Figur 2: einen Teil einer erfindungsgemäßen Leitschaufelanordnung in einer schematischen Axialansicht;
- Figur 3: eine Detailansicht zu Figur 2;
- Figur 4a: in einer schematischen Radialansicht den Aufbau einer Innenplattform, der Übersichtlichkeit halber ohne Konturierung;
- Figur 4b: in einer schematischen Radialansicht den Aufbau einer Außenplattform, der Übersichtlichkeit halber ohne Konturierung;
- Figur 4c: in einer schematischen Radialansicht den Aufbau einer alternativen Außenplattform, der Übersichtlichkeit halber ohne Konturierung.

### Bevorzugte Ausführung der Erfindung

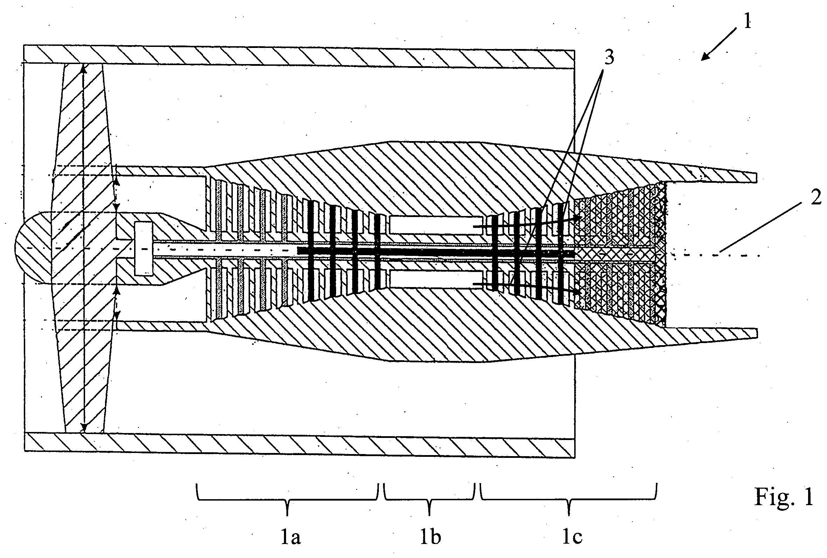

**Fig. 1** zeigt eine Strömungsmaschine 1, konkret ein Mantelstromtriebwerk, in einem Axialschnitt. Die Strömungsmaschine 1 gliedert sich funktional in Verdichter 1a, Brennkammer 1b und Turbine 1c. Sowohl der Verdichter 1a als auch die Turbine 1c sind jeweils aus mehreren Stufen aufgebaut, jede Stufe setzt sich aus einem Leit- und einem darauffolgenden Laufschaufelkranz zusammen. Die Laufschaufelkränze rotieren im Betrieb um die Längsachse 2 der Strömungsmaschine 1. Im Verdichter 1a wird die angesaugte Luft komprimiert, und dann in der nachgelagerten Brennkammer 1b mit hinzugemischtem Kerosin verbrannt. Das Heißgas durchströmt den Heißgaskanal 3 und treibt dabei die Laufschaufelkränze an, die um die Längsachse 2 rotieren.

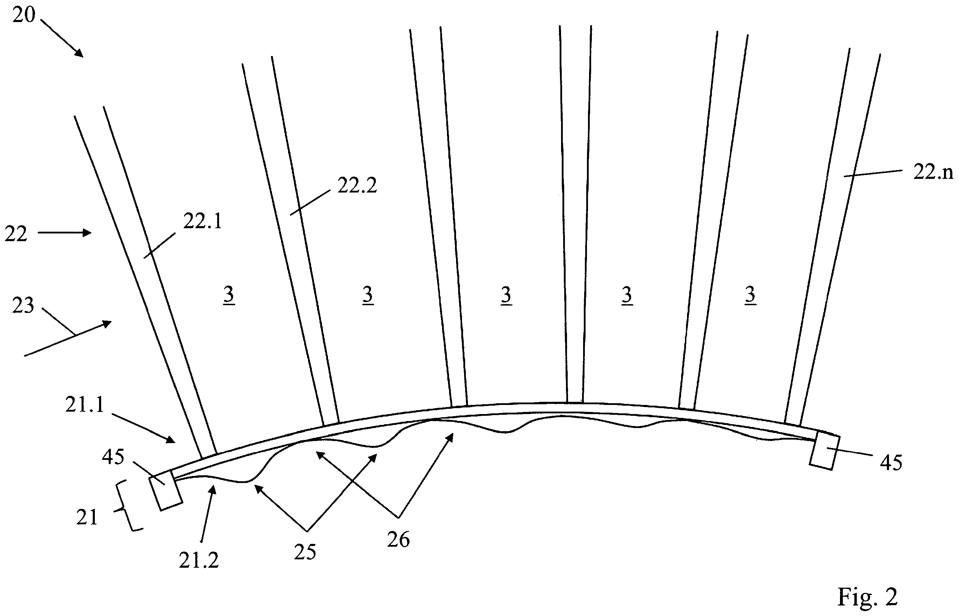

**Figur 2** zeigt einen Teil einer erfindungsgemäßen Leitschaufelanordnung 20, und zwar eine Plattform 21 mit mehreren Leitschaufelblättern 22, nämlich den Leitschaufelblättern 22.1-22.n (vorliegend ist n = 6). Die Leitschaufelanordnung 20 wird als Segment mit weiteren baugleichen Leitschaufelanordnungen (nicht dargestellt) zusammengesetzt, die dann in einer Umlaufrichtung 23 aufeinander folgend gemeinsam einen Leitschaufelkranz bilden. Die Leitschaufeln 22 sind im Falle der Turbine 1c dann im Heißgaskanal 3 angeordnet und werden im Betrieb von dem Verbrennungs- bzw. Heißgas umströmt.

Die Leitschaufeln 22 sind an einer gaskanalzugewandten Seite 21.1 der Plattform 21 angeordnet, die radial entgegengesetzte, gaskanalabgewandte Seite 21.2 ist konturiert. Sie ist mit Erhebungen 25 und Vertiefungen 26 geformt, diese folgen in der Umlaufrichtung 23 wellenförmig aufeinander. Wie in der Beschreibungseinleitung im Einzelnen dargelegt, kann mit dieser Konturierung an der gaskanalabgewandten Seite 21.2 der Plattform 21 das mechanische Spannungsniveau an der entgegengesetzten Seite, konkret am Übergang zwischen der Plattform 21 und den Leitschaufelblättern 22 abgesenkt werden.

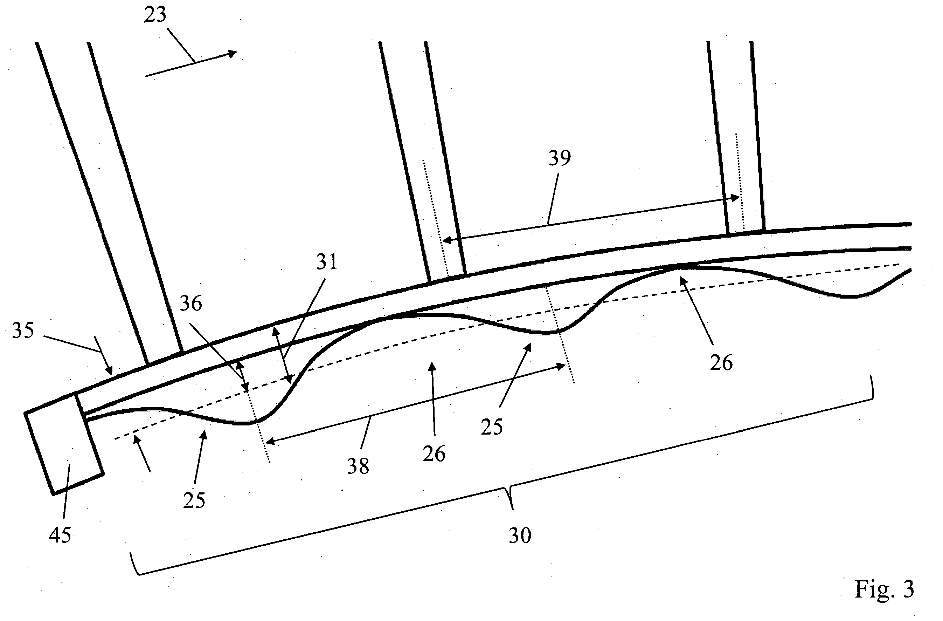

Wie aus Figur 2 und insbesondere der Detailansicht gemäß **Figur 3** ersichtlich, ist die gaskanalzugewandte Seite 21.1 der Plattform 21 nicht komplementär konturiert (vorliegend ist sie glatt ausgebildet). Dementsprechend nimmt in einem konturierten Bereich 30 der Plattform 21 eine Plattformdicke 31 in der Umlaufrichtung 23 wiederholt zu und ab. Vorliegend wird die Plattformdicke 31 im Bereich der Erhebungen 25 größer und bei den Vertiefungen 26 kleiner.

Bezogen auf eine über den Bereich 30 als Mittelwert gebildete mittlere Plattformdicke 35 liegt eine Amplitude 36 der Erhebungen und Vertiefungen zwischen ca. 50 % und 100 %. Die Amplitude 36 ändert sich dabei auch über den konturierten Bereich 30 hinweg, vorliegend nimmt sie in der Umlaufrichtung 23 ab. Bezogen auf eine über die Erhebungen 25 und Vertiefungen 26 des konturierten Bereichs 30 gebildete mittlere Amplitude ergibt sich eine Variation zwischen 30 % und 50 %. In der Umlaufrichtung 23 folgen die Erhebungen 25 und Vertiefungen 26 mit einer Wellenlänge 38 aufeinander, die in etwa einem Umlaufabstand 39 zwischen den Leitschaufelblättern 22 entspricht. Die Zahl der Erhebungen 25 entspricht in etwa (±1) der Zahl der Leitschaufelblätter 22, gleiches gilt für die Zahl der Vertiefungen 26.

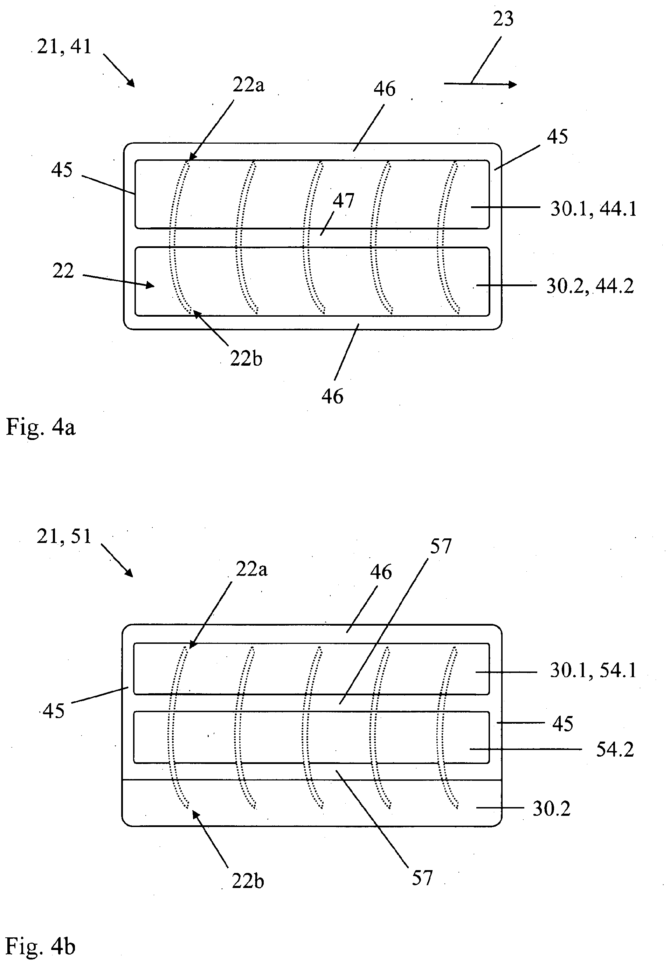

**Figur 4a** zeigt eine Plattform 21 in einer Radialansicht, konkret eine Innenplattform 41. Die Blickrichtung ist radial von innen nach außen, die an der entgegengesetzten (hinter der Zeichenebene) angeordneten Leitschaufelblätter 22 sind zur Orientierung strichliert dargestellt. Zu erkennen sind ihre Vorderkanten 22a, sowie ihre Hinterkanten 22b (der Übersichtlichkeit halber nur für ein Leitschaufelblatt 22 gezeigt). An der Innenplattform 41 sind zwei konturierte Bereiche 30.1, 30.2 gemäß der vorstehenden Beschreibung ausgebildet, also mit Erhebungen und Vertiefungen geformt (in Figur 4a der Übersichtlichkeit halber nicht gezeigt). Die Bereiche 30.1, 30.2 sind in sogenannten Taschen 44.1, 44.2 der Plattform 21 ausgebildet, diese werden in Umlaufrichtung 23 von Seitenstegen 45 eingefasst (vergleiche auch Figur 2 zur Illustration). Axial werden die Taschen 44.1, 44.2 von Dichtstegen 46 eingefasst, ferner gibt es axial dazwischen einen Mittelsteg 47.

**Figur 4b** zeigt ebenfalls eine Plattform 21, nämlich eine Außenplattform 51. Diese wäre bezogen auf die Darstellung gemäß Figur 2 radial entgegengesetzt angeordnet, ist dort jedoch Übersichtlichkeit halber nicht dargestellt. Auch die Außenplattform 51 ist mit konturierten Bereichen 30.1, 30.2 gefasst (in Figur 4b ist die Konturierung nicht gezeigt), in welche die Radialprojektionen der Vorderkanten 22a und Hinterkanten 22b der Leitschaufelblätter 22 fallen. Dabei handelt es sich bei dem konturierten Bereich 30.1 wiederum um eine radial offene Tasche 54.1 (vorliegend nach radial außen offen). Diese wird in der Umlaufrichtung 23 von den Seitenstegen 45 eingefasst, axial wird sie von dem Dichtsteg 46 und einem Montagesteg 57 mit Leitschaufelhaken begrenzt. Zwischen den Montagestegen 57 ist eine weitere Tasche 54.2 ausgebildet, die ebenfalls als konturierter Bereich ausgeführt werden kann, was aber nicht zwingend ist.

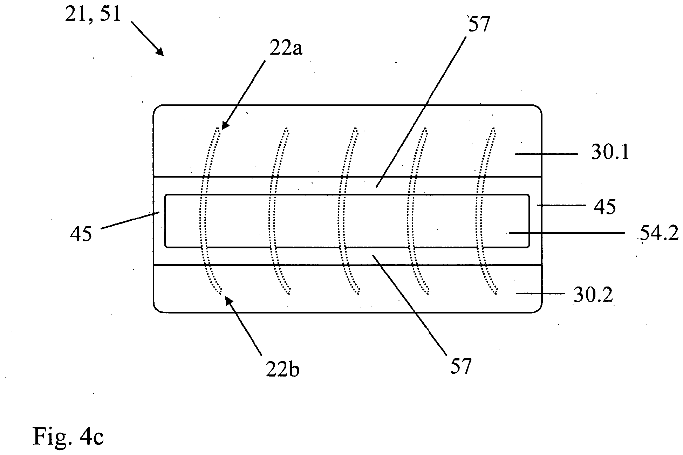

**Figur 4c** zeigt ebenfalls eine Außenplattform 51, wobei im Unterschied zu Figur 4b der konturierte Bereich 30.1 nicht in einer nach axial vorne und seitlich von Seitenstegen 45 begrenzten Tasche 54.1 liegt.

**BEZUGSZEICHENLISTE**

| | | |
|---|---|---|
| Strömungsmaschine | | 1 |
| | Verdichter | 1a |
| | Brennkammer | 1b |
| | Turbine | 1c |
| Längsachse | | 2 |
| Heißgaskanal | | 3 |
| Leitschaufelanordnung | | 20 |
| Plattform | | 21 |
| | Gaskanalzugewandte Seite | 21.1 |
| | Gaskanalabgewandte Seite | 21.2 |
| Leitschaufelblätter | | 22 |
| | Vorderkante | 22a |
| | Hinterkante | 22b |
| | Leitschaufelblätter | 22.1-22.n |
| Umlaufrichtung | | 23 |
| Erhebungen | | 25 |
| Vertiefungen | | 26 |
| konturierter Bereich | | 30 |
| | konturierte Bereiche | 30.1, 30.2 |
| Plattformdicke | | 31 |
| Mittlere Plattformdicke | | 35 |
| Amplitude | | 36 |
| Wellenlänge | | 38 |
| Umlaufabstand | | 39 |
| Innenplattform | | 41 |
| Taschen | | 44.1, 44.2 |
| Seitensteg | | 45 |
| Dichtsteg | | 46 |
| Mittelsteg | | 47 |
| Außenplattform | | 51 |
| Taschen | | 54.1,54.2 |
| Montagesteg | | 57 |

## Patentansprüche

1. Leitschaufelanordnung (20) für eine Strömungsmaschine (1), mit einem Leitschaufelblatt (22), und
einer Plattform (21),
wobei das Leitschaufelblatt (22) an einer gaskanalzugewandten Seite (21.1) der Plattform (21) angeordnet ist,
wobei eine entgegengesetzte, gaskanalabgewandte Seite (21.2) der Plattform (21) zumindest in einem Bereich (30.1,30.2) mit Erhebungen (25) und Vertiefungen (26) konturiert ist, die bezogen auf eine Längsachse (2) der Strömungsmaschine (1) in Umlaufrichtung (23) aufeinander folgen,
und wobei die Erhebungen (25) und Vertiefungen (26) an der gaskanalabgewandten Seite (21.2) über eine jeweils radial genommene, in der Umlaufrichtung (23) veränderliche Plattformdicke (31) eingestellt sind, die mit einem kontinuierlichen Verlauf in der Umlaufrichtung (23) wiederholt zu- und abnimmt, **dadurch gekennzeichnet, dass** der konturierte Bereich (30) in einer radial offenen Tasche (44.1,44.2,54.1,54.2) der Plattform (21) liegt, welche Tasche umlaufend jeweils von einem Seitensteg (45) eingefasst wird.

2. Leitschaufelanordnung (20) nach Anspruch 1, bei welcher eine an den Erhebungen (25) und Vertiefungen (26) jeweils radial genommene Amplitude (36) mindestens 25 % und höchstens 200 % einer in der Umlaufrichtung (23) über den konturierten Bereich (30) gebildeten mittleren Plattformdicke (35) ausmacht.

3. Leitschaufelanordnung (20) nach Anspruch 1 oder 2, bei welcher sich eine an den Erhebungen (25) und Vertiefungen (26) jeweils radial genommene Amplitude (36) in der Umlaufrichtung (23) über den konturierten Bereich (30) ändert.

4. Leitschaufelanordnung (20) nach Anspruch 3, bei welcher sich die Amplitude (36), bezogen auf eine über sämtliche Erhebungen (25) und Vertiefungen (26) des konturierten Bereichs (30) gebildete mittlere Amplitude, um dem Betrag nach mindestens 15 % und höchstens 100 % ändert.

5. Leitschaufelanordnung (20) nach einem der vorstehenden Ansprüche, bei welcher die Vorderkante (22a) und/oder die Hinterkante (22b) des Leitschaufelblatts (22) einen radialen Überlapp mit dem konturierten Bereich (30) hat, also eine radiale Projektion der Vorderkante (22a) und/oder der Hinterkante (22b) in dem konturierten Bereich (30) liegt.

6. Leitschaufelanordnung (20) nach einem der vorstehenden Ansprüche, bei welcher die gaskanalzugewandte Seite (21.1) der Plattform (21) zumindest bereichsweise glatt ausgebildet ist.

7. Leitschaufelanordnung (20) nach einem der vorstehenden Ansprüche, wobei an der Plattform (21) n Leitschaufelblätter (22) angeordnet sind, mit n ≥ 2.

8. Leitschaufelanordnung (20) nach Anspruch 7, bei welcher die Erhebungen (25) und Vertiefungen (26) in dem konturierten Bereich (30) in der Umlaufrichtung (23) mit einer Wellenlänge (38) aufeinanderfolgen, die dem Betrag nach um nicht mehr als 20 % von einem Umlaufabstand (39) zwischen jeweils nächstbenachbarten Leitschaufelblättern (22) abweicht.

9. Leitschaufelanordnung (20) nach Anspruch 7 oder 8, bei welcher die gesamte Zahl Z_{E} der in dem konturierten Bereich (30) in der Umlaufrichtung (23) aufeinanderfolgenden Erhebungen (25) und/oder die gesamte Zahl Z_{V} der in dem konturierten Bereich (30) in der Umlaufrichtung (23) aufeinanderfolgenden Vertiefungen (26) in einem Bereich zwischen n-1 und n+1 liegt, also n-1 ≤ Z_{E} ≤ n+1 und/oder n-1 ≤ Z_{V} ≤ n+1.

10. Leitschaufelanordnung (20) nach einem der vorstehenden Ansprüche, bei welcher die Tasche (44.1,44.2,54.1,54.2) der Plattform (21) axial von einem Dichtsteg (46), einen Mittelsteg (47) und/oder einem Montagesteg (57) eingefasst wird.

11. Turbinenmodul mit einer Leitschaufelanordnung (20) nach einem der vorstehenden Ansprüche.

12. Strömungsmaschine (1), insbesondere Flugtriebwerk, mit einer Leitschaufelanordnung (20) nach einem der Ansprüche 1 bis 10 oder einem Turbinenmodul nach Anspruch 11.

## Claims

1. Guide vane arrangement (20) for a turbomachine (1), comprising a guide vane blade (22) and
a platform (21),
the guide vane blade (22) being arranged on a side (21.1) of the platform (21) facing the gas channel,
an opposite side (21.2) of the platform (21) facing away from the gas channel being contoured at least in one region (30.1, 30.2) by elevations (25) and depressions (26) which follow one another in the circumferential direction (23) relative to a longitudinal axis (2) of the turbomachine (1),
and the elevations (25) and depressions (26) on the side (21.2) facing away from the gas channel being determined by a platform thickness (31) which is taken radially in each case, is variable in the circumferential direction (23) and repeatedly increases and decreases with a continuous profile in the circumferential direction (23), **characterized in that** the contoured region (30) is in a radially open pocket (44.1,44.2,54.1,54.2) of the platform (21), which pocket is peripherally surrounded by a side bar (45) in each case.

2. Guide vane arrangement (20) according to claim 1, wherein an amplitude (36) taken radially in each case at the elevations (25) and depressions (26) amounts to at least 25% and at most 200% of an average platform thickness (35) formed in the circumferential direction (23) over the contoured region (30).

3. Guide vane arrangement (20) according to either claim 1 or 2, wherein an amplitude (36) taken radially in each case at the elevations (25) and depressions (26) changes in the circumferential direction (23) over the contoured region (30).

4. Guide vane arrangement (20) according to claim 3, wherein the amplitude (36), based on an average amplitude formed over all elevations (25) and depressions (26) of the contoured region (30), changes by an amount of at least 15% and at most 100%.

5. Guide vane arrangement (20) according to any of the preceding claims, wherein the leading edge (22a) and/or the trailing edge (22b) of the guide vane blade (22) has a radial overlap with the contoured region (30), i.e. a radial projection of the leading edge (22a) and/or the trailing edge (22b) is in the contoured region (30).

6. Guide vane arrangement (20) according to any of the preceding claims, wherein the side (21.1) of the platform (21) facing the gas channel is at least partially smooth.

7. Guide vane arrangement (20) according to any of the preceding claims, wherein n guide vane blades (22) are arranged on the platform (21), where n ≥ 2.

8. Guide vane arrangement (20) according to claim 7, wherein the elevations (25) and depressions (26) in the contoured region (30) follow one another in the circumferential direction (23) with a wavelength (38) which deviates by an amount of no more than 20% from a circumferential distance (39) between closest adjacent guide vane blades (22) in each case.

9. Guide vane arrangement (20) according to either claim 7 or 8, wherein the total number Z_{E} of the elevations (25) which follow one another in the contoured region (30) in the circumferential direction (23) and/or the total number Zv of the recesses (26) which follow one another in the contoured region (30) in the circumferential direction (23) are in a range between n-1 and n+1, i.e. n-1 ≤ Z_{E} ≤ n+1 and/or n-1 ≤ Zv ≤ n+1.

10. Guide vane arrangement (20) according to any of the preceding claims, wherein the pocket (44.1,44.2,54.1,54.2) of the platform (21) is axially enclosed by a sealing bar (46), a central bar (47) and/or a mounting bar (57).

11. Turbine module comprising a guide vane arrangement (20) according to any of the preceding claims.

12. Turbomachine (1), in particular aircraft engine, comprising a guide vane arrangement (20) according to any of claims 1 to 10 or a turbine module according to claim 11.

## Revendications

1. Agencement d'aube directrice (20) pour une turbomachine (1), comportant une pale d'aube directrice (22), et
une plate-forme (21),
dans lequel la pale d'aube directrice (22) est disposée sur un côté (21.1) de la plate-forme (21) tourné vers le canal de gaz,
dans lequel un côté (21.2) opposé de la plate-forme (21) détourné du canal de gaz est profilé au moins dans une zone (30.1, 30.2) avec des saillies (25) et des creux (26) qui se succèdent dans la direction périphérique (23) par rapport à un axe longitudinal (2) de la turbomachine (1),
et dans lequel les saillies (25) et les creux (26) sur le côté (21.2) détourné du canal de gaz sont réglés par l'intermédiaire d'une épaisseur de plate-forme (31) prise respectivement radialement et variable dans la direction périphérique (23), laquelle épaisseur augmente et diminue de manière répétée avec un tracé continu dans la direction périphérique (23), **caractérisé en ce que** la zone profilée (30) se trouve dans une poche (44.1, 44.2, 54.1, 54.2) radialement ouverte de la plate-forme (21), laquelle poche est bordée sur sa périphérie respectivement par une entretoise latérale (45).

2. Agencement d'aube directrice (20) selon la revendication 1, dans lequel une amplitude (36) prise respectivement radialement au niveau des saillies (25) et des creux (26) représente au moins 25 % et au plus 200 % d'une épaisseur de plate-forme moyenne (35) formée dans la direction périphérique (23) sur la zone profilée (30).

3. Agencement d'aube directrice (20) selon la revendication 1 ou 2, dans lequel une amplitude (36) prise respectivement radialement au niveau des saillies (25) et des creux (26) varie dans la direction périphérique (23) sur la zone profilée (30).

4. Agencement d'aube directrice (20) selon la revendication 3, dans lequel l'amplitude (36), par rapport à une amplitude moyenne formée sur l'ensemble des saillies (25) et des creux (26) de la zone profilée (30), varie en valeur absolue d'au moins 15 % et d'au plus 100 %.

5. Agencement d'aube directrice (20) selon l'une des revendications précédentes, dans lequel le bord d'attaque (22a) et/ou le bord de fuite (22b) de la pale d'aube directrice (22) possèdent un chevauchement radial avec la zone profilée (30), c'est-à-dire qu'une projection radiale du bord d'attaque (22a) et/ou du bord de fuite (22b) est située dans la zone profilée (30).

6. Agencement d'aube directrice (20) selon l'une des revendications précédentes, dans lequel le côté (21.1) de la plate-forme (21) tourné vers le canal de gaz est réalisé de manière à être lisse au moins dans certaines zones.

7. Agencement d'aube directrice (20) selon l'une des revendications précédentes, dans lequel n pales d'aube directrice (22) sont disposées sur la plate-forme (21), avec n ≥ 2.

8. Agencement d'aube directrice (20) selon la revendication 7, dans lequel les saillies (25) et les creux (26) dans la zone profilée (30) se succèdent dans la direction périphérique (23) avec une longueur d'onde (38) qui ne diffère pas en valeur absolue de plus de 20 % d'une distance périphérique (39) entre des pales d'aube directrice (22) respectivement adjacentes.

9. Agencement d'aube directrice (20) selon la revendication 7 ou 8, dans lequel le nombre total Z_{E} de saillies (25) se succédant dans la zone profilée (30) dans la direction périphérique (23) et/ou le nombre total Zv de creux (26) se succédant dans la zone profilée (30) dans la direction périphérique (23) se situent dans une plage comprise entre n - 1 et n + 1, c'est-à-dire que n - 1 ≤ Z_{E} ≤ n + 1 et/ou n - 1 ≤ Z_{V} ≤ n + 1.

10. Agencement d'aube directrice (20) selon l'une des revendications précédentes, dans lequel la poche (44.1, 44.2, 54.1, 54.2) de la plate-forme (21) est bordée axialement par une entretoise d'étanchéité (46), une entretoise centrale (47) et/ou une entretoise de montage (57).

11. Module de turbine comportant un agencement d'aube directrice (20) selon l'une des revendications précédentes.

12. Turbomachine (1), en particulier moteur d'aéronef, comportant un agencement d'aube directrice (20) selon l'une des revendications 1 à 10 ou un module de turbine selon la revendication 11.
